# EUROPÄISCHE PATENTSCHRIFT

(11) **EP 2 251 096 B1**
(45) Veröffentlichungstag und Bekanntmachung des Hinweises auf die Patenterteilung: **07.08.2013**
(21) Anmeldenummer: 10450069.9
(22) Anmeldetag: 30.04.2010
(51) Int. Cl.: B05B 15/12, B05B 15/08, B01D 53/83

(54) **Vorrichtung zum Abscheiden von Partikeln eines flüssigen Beschichungsmaterials**
Device for separating particles of a fluid coating material
Dispositif de séparation de particules d'un matériau de revêtement liquide

(30) Priorität: 15.05.2009 AT 7582009
(43) Veröffentlichungstag der Anmeldung: 17.11.2010
(73) Patentinhaber: LHS Clean Air Systems GmbH, 4360 Grein (AT)
(72) Erfinder: Johann Leonhartsberger, 4360 Grein (AT)
(74) Vertreter: Hübscher, Helmut

(56) Entgegenhaltungen:
- EP-A1- 0 882 490
- DE-A1- 3 925 818
- DE-A1- 4 211 465

## Beschreibung

Die Erfindung betrifft eine Vorrichtung zum Abscheiden von Partikeln eines flüssigen Beschichtungsmaterials aus einem durch eine Beschichtungsanlage, insbesondere eine Lackierkammer, zum Beschichten von Werkstücken strömenden Gas, insbesondere Luft, mit einem der Beschichtungsanlage zugeordneten Absaugtrichter, mit wenigstens einer Aufgabedüse zum Aufgeben eines Bindemittels in die Gasströmung und mit einer Filtereinrichtung zum Abscheiden von Bindemittel und Partikeln aus der Gasströmung, wobei zumindest ein Teil des Bindemittels in einem Kreislauf geführt ist.

Derartige Vorrichtungen dienen dazu den Spritzüberschuss, der beim Lackieren in Lackier-, Beschichtungskabinen od. dgl. in Form eines Lacknebels anfällt, mit dem Absaugtrichter zu erfassen, die Lackpartikel mit einem Bindemittel zu binden und diese Bindemittel mit den daran gebundenen Lackpartikehl anschließend in einer Filtereinrichtung aus dem Gasstrom auszuscheiden. Dabei wird üblicherweise sowohl ein Großteil des Gases als auch des Bindemittels in einem Kreislauf geführt (DE 42 11 465 A1).

Zu diesem Zweck ist es gemäß dieser Vorrichtung vorgesehen, in den Absaugtrichter ein Bindemittel-Luftgemisch einzublasen, welches die im Gasstrom vorhandenen Lackpartikel an sich bindet. Anschließend wird das Gas, Bindemittel und Partikelgemisch einer Filteranlage zugeleitet, wobei sich Bindemittel und Partikel an den Filterelementen der Filteranlage absetzen und von dort in einen Sammelbunker abrieseln bzw. dort hin abgeblasen od. abgerüttelt werden. Aus diesem abgereinigten Partikel - Bindemittelgemisch wird ein Teil ausgeschieden und einer Endverwertung bzw. einer Aufbereitung zugeführt und wird ein entsprechender Anteil an unverbrauchtem Bindemittel dem Bindemittelkreislauf zugemischt und dieses Bindemittelgemisch erneut in den Absaugtrichter eingeblasen. Wegen der geringen Absauggeschwindigkeit, mit welcher der Gasstrom in den Ansaugtrichter eintritt, also im Bereich der Spritzüberschusserfassung, ist durch das Einblasen des Bindemittels mit erheblichen, gewünschten Turbulenzen im Absaugtrichter zu rechnen, was allerdings zur Folge hat, dass Bindemittel in die Beschichtungsanlage zurück auf die zu lackierenden Flächen übertragen wird, was zu einer Ausschussproduktion führt. Des Weiteren ist aufgrund der großflächigen Absaugprofile im Absaugtrichter bei einer punktuellen Düsenanordnung für die eingeblasene Bindemittelmenge nur mit einer Teildurchmischung und damit mit einer schlechten Abbindung von Bindemittel und Spritzüberschuss zu rechnen. Aufgrund der mangelhaften Abbindung kommt es dabei zu Ablagerungen im Rohrleitungssystem und weiters zu Verklebungen der Filterschläuche, was wiederum einen vermehrten Wartungs- und Serviceaufwand mit sich bringt.

Ein Verfahren und eine Vorrichtung zum Entstauben von Zinkbädern ist beispielsweise aus der DE 39 25 818 A1 bekannt. Ein Verfahren gemäß dem Oberbegriff zeigt zudem die DE 42 11 465 A1 gemäß der das Bindemittel direkt in den Absaugtrichter eingeblasen wird. Ein Verfahren zur Reinigung von schadstoffbelasteten Gasen offenbart unter anderem auch die EP 0 882 490 A1, bei der zunächst unbelastetes Bindemittel in ein Abluftrohr aufgegeben und anschließend in einem Kreislauf geführtes Bindemittel zugemischt wird.

Ausgehend von einem Stand der Technik der Eingangs geschilderten Art liegt der Erfindung die Aufgabe zugrunde, eine Vorrichtung zum Abscheiden von Partikeln eines flüssigen Beschichtungsmaterials zu schaffen, das einerseits eine verbesserte Bindung des Spritzüberschusses, also der Farbpartikel ermöglicht und mit dem anderseits ein Austreten von Bindemittel aus dem Absaugtrichter zur Beschichtungsanlage hin, also zur Lackierkammer, sicher vermieden wird.

Die Erfindung löst diese Aufgabe dadurch, dass dem Absaugtrichter in Abströmrichtung des Gases ein Diffusor nachgeordnet ist, in den an zwei gegenüberliegenden Mantelflächen je wenigstens eine Aufgabedüse für das Bindemittel ausmündet.

Ist dem Absaugtrichter ein Diffusor nachgeordnet, in den das Bindemittel eingebracht wird, so ist einerseits eine saubere gleichmäßige Absaugung durch den Absaugtrichter gewährleistet, was ein Rückströmen von Bindemittel in die Beschichtungsanlage sicher unterbindet. Anderseits sorgt eben dieser Diffusor dafür, dass dem Gasstrom nach im Absaugtrichter, eben im Diffusor, eine turbulente Strömung aufgeprägt wird. Zusammen damit, dass die Bindemittelteilchen in den Diffusor beispielsweise mit Förderluft eingeblasen werden, kommt es aufgrund dieser Kombination von Verwirbelungen und Einblasen in den Diffusor zu einer verbesserten Verwirbelung und Bindung der im Gasstrom enthaltenen Spritzüberschusspartikel an das Bindemittel. Als Bindemittel werden beispielsweise Kalksteinmehl, Holzstäube od. dgl. verwendet. Um die Aufnahmefähigkeit des Bindemittels zu erhöhen, kann dieses bzw. dessen Transportmedium, insbesondere Luft, mit dem das Bindemittel in den Diffusor eingeblasen wird vorgeheizt werden, um die Bindewirkung der eine hohe Oberflächenporosität aufweisenden und stark hygroskopisch wirkenden Bindemittel weiter zu verbessern, womit für ein vorzeitiges Abtrocknen des Spritzüberschusses im Gasstrom gesorgt wird. Im einfachsten Fall ist anstatt des Diffusors lediglich ein Absaugrohr vorgesehen.

Besonders vorteilhafte Verhältnisse ergeben sich dabei, wenn dem Diffusor an zwei gegenüberliegenden Mantelflächen je wenigstens eine Aufgabedüse zugeordnet ist. Sind diese Aufgabedüsen dann gegen die gegenüberliegende Diffusormantelfläche gerichtet, ist gewährleistet, dass die gesamte Diffusorfläche mit geringem Aufwand mit einem Bindemittelschleier bzw. -vorhang überdeckt wird und dass möglichst frühzeitig eine vollständige Bindung der Partikel erfolgt, was eine Ablagerung dieser Partikel an Diffusorrohrleitungs- und Filterinnenwänden vermeidet.

Ist zudem die wenigstens eine Aufgabedüse derart schwenkverstellbar am Diffusor angeordnet, dass der Einsprühwinkel einstellbar ist, so kann insbesondere bei wenigstens zwei vorgesehenen Aufgabedüsen die Einsprührichtung derart gewählt werden, dass der Strömung im Diffusor durch die gegenseitig versetzten Einsprührichtungen zusätzlich Wirbel aufgeprägt werden. Dieser Effekt kann wahlweise auch dadurch erreicht werden bzw. zusätzlich dadurch verstärkt werden, dass die Aufgabedüse entlang einer Führung in Richtung zur Diffusorlängsachse verschiebbar ist. Dies ist insbesondere dann von Vorteil, wenn der Diffusor von einem Schacht gebildet wird, der planparallele Seitenflächen aufweist, in denen die Aufgabedüsen vorgesehen sind, welche planparallelen Seitenwände über sich in Strömungsrichtung des Gases erweiternde Mantelflächen verbunden sind. Damit ergeben sich nicht nur besonderes einfache Konstruktions- und Bauverhältnisse sondern kann auch eine besonders flache Unterkonstruktion für die Beschichtungsanlage erzielt werden.

Um sowohl Bindemittel als auch die daran gebundenen Partikel vorteilhaft aus dem Gasstrom ausscheiden zu können, empfiehlt es sich, wenn der Diffusor über eine Absaugleitung an die Filtereinrichtung angeschlossen ist, der eine Austragsschnecke für von Filterelementen abgeschiedenes Bindemittel und den daran gebundenen Partikeln zugehört. Insbesondere fällt das von den Filtern der Filtereinrichtung ausgefilterte Partikel- Beschichtungsgemisch in einen Auffangbehälter bzw. wird dieses Gemisch in diesen Behälter abgerüttelt oder abgeblasen und wird dieses ausgefilterte Bindemittelpartikelgemisch mit der Austragsschnecke einer Wiederverwertung bzw. einer Weiterverwertung zugeführt.

Um dabei mit möglichst geringem Aufwand aber dennoch sehr genau einen bestimmten Anteil des Bindemittels aus dem Bindemittelkreislauf ausscheiden und durch unverbrauchtes Bindemittel ersetzen zu können, wird gemäß einer vorteilhaften Weiterbildung der Erfindung vorgeschlagen, dass der Austragsschnecke zwischen einem der Filtereinrichtung zugeordneten Einzugsbereich und einem Austragsbereich ein Ausscheidebereich für aus dem Bindemittelkreislauf zu entnehmendes Bindemittel und zwischen dem Ausscheidebereich und dem Austragsbereich wenigstens ein Einbringbereich für in den Bindemittelkreislauf einzubringendes Bindemittel zugehört. Ist dem Ausscheidebereich zudem eine Dosiereinrichtung für die auszuscheidende, insbesondere verbrauchte, Bindemittelmenge zugeordnet, die einer Wiederverwertung bzw. eine Aufbereitung od. dgl. zugeführt werden soll, so kann dies in einfacher Weise dann bewerkstelligt werden, wenn die Schleuse vorzugsweise eine weitere Austrags- bzw. Dosierschnecke ist oder aber eine Zellradschleuse od. dgl. an dieser Stelle vorgesehen ist.

Gleichermaßen wie gebrauchtes Bindemittel aus dem Kreislauf entnommen wird, kann unverbrauchtes Bindemittel aus einem oder mehreren Vorratsbunkern vorzugsweise wiederum über eine Dosiervorrichtung in den Einbringungsbereich für unverbrauchtes Bindemittel der Austragsschnecke eingebracht werden, wobei die Austragsschnecke für eine entsprechende Durchmischung von unverbrauchten und bereits teilweise verbrauchtem Bindemittel sorgt. Dabei können natürlich mehrere Vorratsbehälter vorgesehen sein, die gegebenenfalls verschiedene Bindemittel wie Kalksteinmehl, Sägemehl od. dgl., über den Einbringungsbereich in den Bindemittelkreislauf einbringen. Am Austragsbereich der Austragsschnecke mündet diese vorzugsweise über eine weitere Dosiereinrichtung in einen Injektor, mit dem das Bindemittel in einen Förderluftstrom aufgegeben und das Bindemittel beispielsweise mit Druckluft aufgelöst wird. Der Förderluftstrom leitet das Bindemittel zu den Aufgabedüsen am Diffusor und bläst es in den Diffusor ein. Dazu sind entsprechende Gebläse und gegebenenfalls ein Heizregister vorzusehen, um die Förderluft mit entsprechendem Druck, Geschwindigkeit und Temperatur samt Bindemittel in den Diffusor einbringen zu können. Zu diesem Zweck ist die Austragsschnecke vorzugsweise über eine Schleuse und einen Injektor an eine Förderluftleitung angeschlossen, die zum Einblasen des Bindemittels in den Diffusor in die wenigstens eine Aufgabedüse ausmündet.

Soll die Bindewirkung des Bindemittels weiter erhöht werden, empfiehlt es sich, die Verweildauer des Bindemittels und der Partikel in der Vorrichtung vor einem Abscheiden in der Filteranlage zu erhöhen, wozu es von Vorteil ist, wenn der Diffusor über eine zumindest abschnittsweise zueinander parallel verlaufende Absaugleitung an die Filtereinrichtung angeschlossen ist, wobei am Diffusor eine wenigstens 90°ige Gasstromumleitung mit einem mittleren Umlenkungsradius von wenigstens 100 mm vorgesehen ist. Gleiche Umlenkungen können auch zwischen den zueinander parallel verlaufenden Abschnitten vorgesehen sein. Dazu ist die Absaugleitung beispielsweise in Schleifen verlegt oder mäanderförmig angeordnet.

Ist der Absaugtrichter doppelwandig ausgebildet und ist der Hohlraum zwischen innerer und äußerer Trichterwand an einen Kühlmittelkreislauf angeschlossen, so kann dieser Hohlraum mit einem Kühlmittel durchströmt werden, was ein Auskondensieren von Spritzüberschuss und Feuchtigkeit an der Absaugtrichterinnenfläche zur Folge hat. Dieser auskondensierende Überschuss wird anschließend beispielsweise in einer Sammelrinne aufgefangen und aus der Vorrichtung ausgebracht.

Soll ein Anhaften des Spritzüberschusses an der Absaugtrichterinnenfläche vermieden werden, empfiehlt es sich, die Absaugtrichterinnenfläche mit einer Antihaftbeschichtung, insbesondere einer fluidabweisenden Oberfläche, auszustatten.

Auch wenn die abgesaugten Gase dem Diffusor über den Absaugtrichter verwirbelungsfrei zugeleitet werden, lässt es sich dennoch nicht vermeiden, dass sich Partikel an der Absaugtrichterinnenfläche absetzen. Um den Absaugtrichter vorteilhaft von diesen Belägen reinigen zu können, empfiehlt es sich, wenn die Mantelinnenfläche des Absaugtrichters mit einer Schutzfolie ausgekleidet ist. Diese Schutzfolie kann insbesondere passgenau, beispielsweise auf einer entsprechenden Gegenform, vorgefertigt werden und kann kurzfristig ohne hohen Aufwand gegen eine neue unverbrauchte Folie ausgetauscht werden. Die Folie ist bei Bedarf selbstklebend ausgebildet.

Besonders vorteilhafte Verhältnisse ergeben sich allerdings, wenn der Absaugtrichter doppelwandig ausgebildet ist und wenn die innere Trichterwand mit Ansaugöffnungen, beispielsweise Lochblechen, ausgestattet ist und der Hohlraum zwischen innerer und äußerer Trichterwand evakuierbar ist. Wird die Schutzfolie in den Trichter eingelegt und der Hohlraum zwischen innerer und äußerer Trichterwand evakuiert, ist auf einfache Weise ein sicherer Halt der Schutzfolie im Absaugtrichter gewährleistet. Zudem ist ein sauberes Anliegen der Folie an der Trichterwand sichergestellt und muss nicht in umständlicher Weise mit Klebefolien, die gegebenenfalls Falten werfen, hantiert werden. Um dabei vorteilhafte Herstellungsverhältnisse für die Schutzfolie schaffen zu können, wird vorgeschlagen, dass der Absaugtrichter aus wenigstens zwei in Hauptströmrichtung des Gases nacheinander angeordneten Mantelabschnitten mit je vier Mantelflächen zusammengesetzt ist, von denen je zwei Mantelflächen planparallel zueinander und die anderen beiden mit sich in Hauptströmrichtung des Gases verringerndem Abstand angeordnet sind, wobei die Abschnittsflächen einer Absaugtrichtermantelseite abwechselnd planparallel und mit sich in Hauptströmrichtung verringerndem Abstand angeordnet sind.

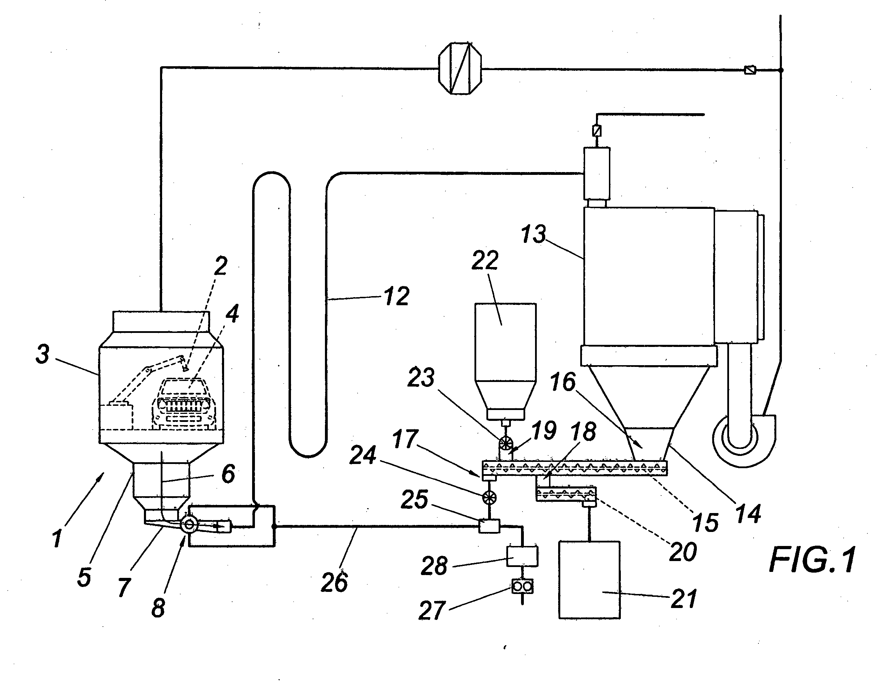

In der Zeichnung ist die Erfindung anhand eines Ausbildungsbeispieles schematisch dargestellt. Es zeigen
Fig. 1 ein Anlagenschema der erfindungsgemäßen Vorrichtung,
Fig. 2 eine Schrägansicht auf einen Absaugtrichter einer erfindungsgemäßen Anlage mit angeschlossenem Diffusor,
Fig. 3 einen Teilquerschnitt des Absaugtrichters aus Fig. 2 und
Fig. 4 eine Draufsicht auf den Diffusor aus Fig. 2.

Eine erfindungsgemäße Vorrichtung 1 zum Abscheiden von Partikeln eines flüssigen Beschichtungsmaterials 2 aus einer durch eine Lackierkammer 3 zum Beschichten von Werkstücken 4 strömenden Gases, insbesondere Luft, umfasst unter anderem einen der Lackierkammer 3 zugeordneten Absaugtrichter 5, der im dargestellten Ausführungsbeispiel bodenseitig der Lackierkammer 3 angeordnet ist. Diesem Absaugtrichter 5 ist in Hauptabströmrichtung 6 des Gases ein Diffusor 7 nachgeordnet, in den im dargestellten Ausführungsbeispiel wenigstens zwei Aufgabedüsen 8 für ein Bindemittel ausmündet. Über diese Aufgabedüsen 8 wird ein Bindemittel in die Gasströmung aufgegeben, welches die im Gasstrom vorhandenen Partikel an sich binden soll. Das Einbringen des Bindemittels erfolgt durch Einblasen eines Bindemittel-Förderluftgemisches in den Diffusor 7, wozu an zwei gegenüberliegenden Mantelflächen 9 je eine Aufgabedüse 8 vorgesehen ist und wobei die Aufgabedüsen 8 derart schwenkverstellbar am Diffusor 7 angeordnet sind, dass der Einsprühwinkel α, β einstellbar ist. Ebenso sind die Aufgabedüsen 8 entlang je einer Führung 10 in Richtung der Diffusorlängsachse 11 bzw. parallel dazu, verschiebbar. Damit lässt sich die Verwirbelung des Gases im Diffusor 7 erhöhen, wodurch die Bindewirkung des Bindemittels verbessert wird. Zur Erzielung einer zusätzlichen Verbesserung der Bindewirkung und einer Vortrocknung des Partikel-, Gas-, Bindemittelgemisches ist der Diffusor 7 über eine Absaugleitung 12 an eine Filtereinrichtung 13 angeschlossen, wobei die Absaugleitung 12 zumindest abschnittsweise zueinander parallel verlaufende Abschnitte umfasst.

Die Filtereinrichtung umfasst in ihrem Inneren nicht näher dargestellte Filterelemente, von denen ausgeschiedene Bindemittel und Partikel in einen Sammelbehälter 14 abfallen bzw. in diesen eingeblasen werden und eine Fördereinrichtung für das Gas. An diesen Sammelbehälter 14 ist bodenseitig eine Austragsschnecke 15 für die von den Filterelementen abgeschiedenen Bindemittel und Partikel angeschlossen. Dieser Austragsschnecke 15 gehört zwischen einem der Filtereinrichtung 13 zugeordneten Einzugsbereich 16 und einem Austragsbereich 17 ein Ausscheidebereich 18 für aus dem Bindemittelkreislauf zu entnehmendes Bindemittel und wenigstens ein Einbringungsbereich 19 für Bindemittelkreislauf einzubringendes unverbrauchtes Bindemittel zu.

Das Bindemittel-Partikelgemisch wird von der Austragsschnecke 15 aufgenommen, zum Ausscheidebereich verlagert, von wo es entsprechend dosiert mit einer weiteren Dosierschnecke 20 aus dem Bindemittelkreislauf ausgeschieden und in einen Auswurfbehälter 21 abgegeben wird. Bei entsprechender Ansteuerung der beiden Schnecken 15, 20 lassen sich nahezu beliebige Austauschgrade für das Bindemittel realisieren. So können beispielsweise 20 % Bindemittel aus dem Kreislauf ausgeschieden werden, die in weiterer Folge durch unverbrauchtes Bindemittel ersetzt werden müssen. Zum Ersetzen ist an den Einbringungsbereich 19 ein Vorratsbehälter 22 für unverbrauchtes Bindemittel angeschlossen, wobei die Dosierung über eine Dosiereinrichtung, eine Zellradschleuse 23, erfolgt. Die Dosiereinrichtungen 20 und 23 können wahlweise Zellradschleusen, Schnecken od. dgl. sein. In weiterer Folge erfolgt durch die Austragsschnecke 15 eine Durchmischung von bereits verbrauchten und unverbrauchten Bindemittel, dass in weiterer Folge über den Austragsbereich 17 und eine weitere Dosiereinrichtung 24 in einem nur angedeuteten Injektor 25 in eine Förderluftleitung 26 aufgegeben wird. Der Förderluftleitung 26 gehört ein Gebläse 27 bzw. ein Druckspeicher od. dgl. ebenso zu wie ein Heizregister 28, mit dem die geförderte Luft entsprechend temperiert werden kann. Im Injektor 25 wird das Bindemittel in die Förderluft aufgegeben, welches dann über die Aufgabedüsen 8 in den Diffusor eingebracht wird.

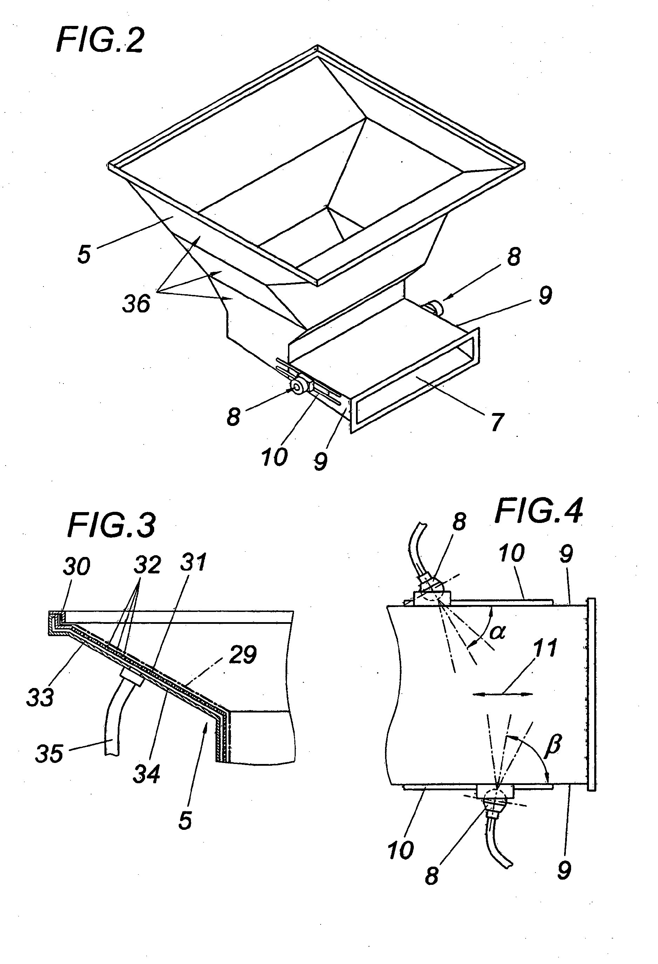

Insbesondere Fig. 3 ist zu entnehmen, dass die Mantelinnenfläche des Absaugtrichters 5 mit einer Schutzfolie 29 ausgekleidet ist. Diese Schutzfolie 29 wird Austragstrichtereintragsseitig zwischen dem Trichter 5 und einem Profil 30, welches gegebenenfalls mit der Folie unverlierbar verbunden sein kann, gehalten. Der Absaugtrichter 5 ist dabei doppelwandig ausgebildet, wobei die innere Trichterwand 31 mit Ansaugöffnungen 32 ausgestattet ist und wobei der Hohlraum 33 zwischen innerer Trichterwand 31 und äußerer Trichterwand 34 evakuierbar ist. Dazu ist der Hohlraum 33 über eine angedeutete Leitung 35 mit einer Vakuumpumpe verbunden. Durch diese Maßnahme ist gewährleistet, dass die Schutzfolie 29 in einfacher Weise sauber an der Mantelinnenfläche des Absaugtrichters 5 anliegt und zudem rasch und unkompliziert gegen eine unverbrauchte Schutzfolie ausgetauscht werden kann. Dazu empfiehlt es sich, wenn der Absaugtrichter 5 aus wenigstens zwei in Hauptströmrichtung 6 des Gases nacheinander angeordneten Mantelabschnitten 36 mit je vier Mantelflächen zusammengesetzt ist, von denen je zwei Mantelflächen planparallel zueinander und die anderen beiden mit sich in Hauptströmrichtung des Gases verringerndem Abstand angeordnet sind, wobei die Abschnittsflächen einer Ansaugtrichtermantelseite abwechselnd planparallel und mit sich in Hauptströmrichtung verringerndem Abstand angeordnet sind. Durch diese Maßnahme lassen sich die Schutzfolien 29 besonders einfach, beispielsweise an einer Negativform, gegebenenfalls aus Schrumpffolien od. dgl. fertigen.

## Patentansprüche

1. Vorrichtung zum Abscheiden von Partikeln eines flüssigen Beschichtungsmaterials aus einem durch eine Beschichtungsanlage, insbesondere eine Lackierkammer (3), zum Beschichten von Werkstücken (4) strömenden Gas, insbesondere Luft, mit einem der Beschichtungsanlage zugeordneten Absaugtrichter (5), mit wenigstens einer Aufgabedüse (8) zum Aufgeben eines Bindemittels in die Gasströmung und mit einer Filtereinrichtung (13) zum Abscheiden von Bindemittel und Partikeln aus der Gasströmung, wobei zumindest ein Teil des Bindemittels in einem Kreislauf geführt ist, **dadurch gekennzeichnet, dass** dem Absaugtrichter (5) in Abströmrichtung (6) des Gases ein Diffusor (7) nachgeordnet ist, in den an zwei gegenüberliegenden Mantelflächen (9) je wenigstens eine Aufgabedüse (8) für das Bindemittel ausmündet.

2. Vorrichtung nach Anspruch 1, **dadurch gekennzeichnet, dass** die Aufgabedüsen geeignet sind, (8) Bindemittel bei einer mittleren Strömungsgeschwindigkeit des Gases von wenigstens 2 m/s in die Gasströmung aufzugeben.

3. Vorrichtung nach Anspruch 1 oder 2, **dadurch gekennzeichnet**, das die Aufgabedüse (8) derart schwenkverstellbar am Diffusor (7) angeordnet ist, dass der Einsprühwinkel (α, β) einstellbar ist.

4. Vorrichtung nach einem der Ansprüche 1 bis 3, **dadurch gekennzeichnet, dass** die Aufgabedüse (8) entlang einer Führung (10) in Richtung zur Diffusorlängsachse (11) verschiebbar ist.

5. Vorrichtung nach einem der Ansprüche 1 bis 4, **dadurch gekennzeichnet, dass** der Diffusor (7) über eine Absaugleitung (12) an die filtereinrichtung (13) angeschlossen ist, der eine Austragsschnecke (15) für von Filterelementen abgeschiedenes Bindemittel und den daran gebundenen Partikeln zugehört.

6. Vorrichtung nach Anspruch 5, **dadurch gekennzeichnet, dass** der Austragsschnecke (15) zwischen einem der Filtereinrichtung (13) zugeordneten Einzugsbereich (16) und einem Austragsbereich (17) ein Ausscheidebereich (18) für aus dem Bindemittelkreislauf zu entnehmendes Bindemittel und wenigstens ein Einbringbereich (19) für in den Bindemittelkeislauf einzubringendes Bindemittel zugehört.

7. Vorrichtung nach Anspruch 5 oder 6, **dadurch gekennzeichnet, dass** die Austragsschnecke vorzugsweise über eine Schleuse (24) und einen Injektor (25) an eine Förderluftleitung (26) angeschlossen ist, die zum Einblasen des Bindemittels in den Diffusor (7) in die wenigstes einen Aufgabedüse (8) ausmündet.

8. Vorrichtung nach Anspruch 7, **dadurch gekennzeichnet, dass** der Förderluftleitung (26) ein Heizregister (28) für die das Bindemittel in den Diffusor (7) einblasende Förderluft zugehört.

9. Vorrichtung nach einem der Ansprüche 1 bis 8, **dadurch gekennzeichnet, dass** der Diffusor (7) über eine zumindest abschnittsweise zueinander parallel verlaufende, in Schleifen verlegte oder mäanderförmig angeordnete, Absaugleitung (12) an die Filtereinrichtung (13) angeschlossen ist, wobei am Diffusor (7) vorzugsweise eine wenigstens 90°ige Gasstromumlenkung mit einem mittleren Umlenkungsradius von wenigstens 100 mm vorgesehen ist.

10. Vorrichtung nach einem der Ansprüche 1 bis 9, **dadurch gekennzeichnet, dass** der Absaugtrichter (5) doppelwandig ausgebildet ist und der Hohlraum zwischen innerer und äußerer Trichterwand (31, 34) an einen Kühlmittelkreislauf abgeschossen ist.

11. Vorrichtung nach einem der Ansprüche 1 bis 10, **dadurch gekennzeichnet, dass** die Absaugtrichterinnenfläche mit einer Antihaftbeschichtung, insbesondere einer fluidabweisenden Oberfläche, ausgestattet ist.

12. Vorrichtung nach einem der Ansprüche 1 bis 11, **dadurch gekennzeichnet, dass** die Mantelinnenfläche des Absaugtrichters (5) mit einer Schutzfolie (29) ausgekleidet ist.

13. Vorrichtung nach einem der Ansprüche 1 bis 12, **dadurch gekennzeichnet, dass** der Absaugtrichter (5) doppelwandig ausgebildet ist, dass die innere Trichterwand (31) mit Ansaugöffnungen (32) ausgestattet ist und der Hohlraum (33) zwischen innerer und äußerer Trichterwand (31, 34) evakuierbar ist.

14. Vorrichtung nach einem der Ansprüche 1 bis 13, **dadurch gekennzeichnet, dass** der Absaugtrichter (5) aus wenigstens zwei in Hauptströmrichtung (6) des Gases nacheinander angeordneten Mantelabschnitten (36) mit je vier Mantelflächen zusammengesetzt ist von denen je zwei Mantelflächen (37) planparallel zueinander und die anderen beiden mit sich in Hauptströmrichtung des Gases verringerndem Abstand angeordnet sind, wobei die Abschnittsflächen einer Absaugtrichtermantelseite abwechselnd planparallel und mit sich in Hauptströmrichtung verringerndem Abstand angeordnet sind.

## Claims

1. Device for separating particles of a liquid coating material from a gas, in particular air, flowing through a coating installation, in particular a painting chamber (3), for coating workpieces (4), having a suction funnel (5) allocated to the coating installation, having at least one discharge nozzle (8) for discharging a binder into the gas flow and having a filter device (13) for separating binder and particles from the gas flow, wherein at least a part of the binder is carried in a circuit, **characterised in that** a diffuser (7) is disposed downstream of the suction funnel (5) in the flow direction (6) of the gas, into which diffuser in each case at least one discharge nozzle (8) for the binder issues at two opposing casing surfaces (9).

2. Device as claimed in claim 1, **characterised in that** the discharge nozzles (8) are suitable for discharging binder into the gas flow at an average flow rate of the gas of at least 2 m/s.

3. Device as claimed in claim 1 or 2, **characterised in that** the discharge nozzle (8) is disposed in a pivotably adjustable manner on the diffuser (7) in such a way that the sprayin angle (α, β) is adjustable.

4. Device as claimed in any one of claims 1 to 3, **characterised in that** the discharge nozzle (8) can be displaced along a guide (10) in the direction of the longitudinal axis (11) of the diffuser.

5. Device as claimed in any one of claims 1 to 4, **characterised in that** the diffuser (7) is attached to the filter device (13) via a suction line (12), to which filter device a discharge screw (15) for binder separated by filter elements and the particles bound thereto appertains.

6. Device as claimed in claim 5, **characterised in that**, between an intake region (16), which is allocated to the filter device (13), and a discharge region (17), a separating region (18) for binder to be removed from the binder circuit, and at least one introduction region (19) for binder to be introduced into the binder circuit appertains to the discharge screw (15).

7. Device as claimed in claim 5 or 6, **characterised in that** the discharge screw is attached to a conveying air line (26) preferably via a lock (24) and an injector (25), which conveying air line issues into the at least one discharge nozzle (8) in order to blow the binder into the diffuser (7).

8. Device as claimed in claim 7, **characterised in that** a radiator (28) for the conveying air blowing the binder into the diffuser (7) appertains to the conveying air line (26).

9. Device as claimed in any one of claims 1 to 8, **characterised in that** the diffuser (7) is attached to the filter device (13) via a suction line (12), of which at least portions extend in parallel with each other and which is laid in loops or disposed in a serpentine manner, wherein preferably an at least 90° gas flow deflection with an average deflection radius of at least 100 mm is provided on the diffuser (7).

10. Device as claimed in any one of claims 1 to 9, **characterised in that** the suction funnel (5) is formed with a double wall and the chamber between the inner and outer funnel wall (31, 34) is attached to a coolant circuit.

11. Device as claimed in any one of claims 1 to 10, **characterised in that** inner surface of the suction funnel is provided with a non-stick coating, in particular a fluid-repelling surface.

12. Device as claimed in any one of claims 1 to 11, **characterised in that** the casing inner surface of the suction funnel (5) is lined with a protective film (29).

13. Device as claimed in any one of claims 1 to 12, **characterised in that** the suction funnel (5) is formed with a double wall, that the inner funnel wall (31) is provided with suction openings (32) and the chamber (33) between the inner and outer funnel wall (31, 34) can be evacuated.

14. Device as claimed in any one of claims 1 to 13, **characterised in that** the suction funnel (5) is composed of at least two casing portions (36) which are disposed one after another in the main flow direction (6) of the gas and each have four casing surfaces, of which in each case two casing surfaces (37) are disposed in a plane-parallel manner with respect to each other and the other two are disposed at a spaced interval which narrows in the main flow direction of the gas, wherein the portion surfaces of one suction funnel casing side are disposed alternately in a plan-parallel manner and at a spaced interval which narrows in the main flow direction.

## Revendications

1. Dispositif de séparation de particules d'un matériau de revêtement liquide à partir d'un gaz, en particulier de l'air, circulant à travers une installation de revêtement, en particulier une chambre de laquage (3), pour recouvrir des pièces (4), avec un entonnoir d'aspiration (5) associé à l'installation de revêtement, avec au moins une buse d'injection (8) pour alimenter en un agent liant le flux de gaz et avec un dispositif de filtrage (13) pour séparer l'agent liant et les particules du flux de gaz, au moins une partie de l'agent liant étant guidée dans un circuit, **caractérisé en ce qu'**un diffuseur (7) est disposé en aval de l'entonnoir d'aspiration (5) dans le sens de reflux (6) du gaz, dans lequel, à chaque fois, au moins une buse d'injection (8) pour l'agent liant débouche au niveau de deux surfaces d'enveloppe (9) opposées.

2. Dispositif selon la revendication 1, **caractérisé en ce que** les buses d'injection (8) sont appropriées pour alimenter l'agent liant à une vitesse moyenne d'écoulement du gaz d'au moins 2 m/s dans le flux de gaz.

3. Dispositif selon la revendication 1 ou 2, **caractérisé en ce que** la buse d'injection (8) est disposée de façon à pouvoir pivoter au niveau du diffuseur (7), de telle sorte que l'angle de pulvérisation (α, β) peut être ajusté.

4. Dispositif selon l'une des revendications 1 à 3, **caractérisé en ce que** la buse d'injection (8) peut être déplacée le long d'un guide (10) en direction de l'axe du diffuseur (11).

5. Dispositif selon l'une des revendications 1 à 4, **caractérisé en ce que** le diffuseur (7) est raccordé par le biais d'une conduite d'aspiration (12) au niveau du dispositif de filtration (13) qui présente une vis d'extraction (15) pour l'agent liant séparé des éléments de filtrage et des particules liées.

6. Dispositif selon la revendication 5, **caractérisé en ce qu'**une zone de séparation (18) pour l'agent liant à retirer du circuit de l'agent liant et au moins une zone d'amenée (19) pour l'agent liant à amener dans le circuit de l'agent liant appartiennent à la vis d'extraction (15) entre une zone d'introduction (16) associée au dispositif de filtrage (13) et une zone d'extraction (17).

7. Dispositif selon la revendication 5 ou 6, **caractérisé en ce que** la vis d'extraction est raccordée de préférence par le biais d'un sas (24) et d'un injecteur (25) à une conduite d'air de transport (26) qui débouche pour répandre l'agent liant dans le diffuseur (7) dans au moins une buse d'injection (8).

8. Dispositif selon la revendication 7, **caractérisé en ce que** la conduite d'air de transport (26) présente un registre de chauffage (28) pour l'air de transport soufflant l'agent liant dans le diffuseur (7).

9. Dispositif selon l'une des revendications 1 à 8, **caractérisé en ce que** le diffuseur (7) est raccordé par le biais d'une conduite d'aspiration (12) disposée en forme de méandres, ou posée en boucles, au moins par parties, parallèles les unes aux autres, au dispositif de filtrage (13), de préférence une déviation du flux de gaz d'au moins 90° avec un rayon de déviation moyen d'au moins 100 mm étant prévue au niveau du diffuseur (7).

10. Dispositif selon l'une des revendications 1 à 9, **caractérisé en ce que** l'entonnoir d'aspiration (5) est conçu à double parois et que l'espace creux entre la paroi interne et la paroi externe de l'entonnoir (31, 34) est raccordé à un circuit de liquide de refroidissement.

11. Dispositif selon l'une des revendications 1 à 10, **caractérisé en ce que** la face intérieure de l'entonnoir d'aspiration est munie d'un revêtement anti-adhérant, en particulier d'une surface repoussant les fluides.

12. Dispositif selon l'une des revendications 1 à 11, **caractérisé en ce que** la face intérieure de l'enveloppe de l'entonnoir d'aspiration (5) est garnie d'un film de protection (29).

13. Dispositif selon l'une des revendications 1 à 12, **caractérisé en ce que** l'entonnoir d'aspiration (5) est conçu à double parois, **en ce que** la paroi interne de l'entonnoir (31) est munie d'ouvertures d'aspiration (32) et **en ce que** l'espace creux (33) entre la paroi interne et la paroi externe de l'entonnoir (31, 34) peut être vidé.

14. Dispositif selon l'une des revendications 1 à 13, **caractérisé en ce que** l'entonnoir d'aspiration (5) est composé au moins de deux sections d'enveloppe (36) disposées l'une après l'autre dans le sens principal d'écoulement (6) du gaz, avec à chaque fois, quatre faces d'enveloppe, dont respectivement deux faces d'enveloppe (37) sont disposées mutuellement planes et parallèles et les deux autres, avec un espace diminuant dans le sens principal d'écoulement du gaz, les faces de section d'un côté de l'enveloppe de l'entonnoir d'aspiration étant disposées alternativement planes et parallèles et avec un espace diminuant dans le sens principal d'écoulement.
